# EUROPÄISCHE PATENTSCHRIFT

(11) **EP 1 141 183 B1**
(45) Veröffentlichungstag und Bekanntmachung des Hinweises auf die Patenterteilung: **26.05.2004**
(21) Anmeldenummer: 00981204.1
(22) Anmeldetag: 19.10.2000
(51) Int. Cl.: C11C 3/00

(54) **VERFAHREN ZUR UMESTERUNG VON FETT UND/ODER ÖL BIOLOGISCHEN URSPRUNGS MITTELS ALKOHOLYSE**
METHOD FOR THE REESTERIFICATION OF FAT AND/OR OIL OF BIOLOGICAL ORIGIN BY MEANS OF ALCOHOLYSIS
PROCEDE DE TRANSESTERIFICATION DE CORPS GRAS ET/OU D'HUILE D'ORIGINE BIOLOGIQUE PAR ALCOOLYSE

(30) Priorität: 20.10.1999 DE 19950593
(43) Veröffentlichungstag der Anmeldung: 10.10.2001
(73) Patentinhaber: Peter, Siegfried, Prof. Dr., 91080 Uttenreuth-Weiher (DE)
(72) Erfinder: PETER, Siegfried, 91080 Uttenreuth (DE); WEIDNER, Eckhard, 44795 Bochum (DE); NEUNER, Hans-Peter, 90489 Nürnberg (DE); GANSWINDT, Ruth, 63571 Genhausen-Haller (DE)
(74) Vertreter: Beyer, Andreas, Dr.
(86) Internationale Anmeldenummer: PCT/EP2000/010314
(87) Internationale Veröffentlichungsnummer: WO 2001/029160

(56) Entgegenhaltungen:
- GB-A- 979 523
- GB-A- 1 325 924
- GB-A- 2 161 809
- SCHUCHARDT, U., VARGAS, R. M., AND GELBARD, G.: "Alkylguanidines as catalysts for the transesterification of rapeseed oil" JOURNAL OF MOLECULAR CATALYSIS. A, CHEMICAL., Bd. 99, 1995, Seiten 65-70, XP000992192 ELSEVIER, AMSTERDAM., NL ISSN: 1381-1169
- SERCHELI, R., VARGAS, R. M., AND SCHUCHARDT, U.: "Alkylguanidine-catalyzed heterogeneous transesterification of soybean oil" JOURNAL OF THE AMERICAN OIL CHEMISTS SOCIETY, Bd. 76, Nr. 10, 1999, Seiten 1207-1210, XP002163432

## Beschreibung

Die Erfindung betrifft ein Verfahren zur Gewinnung von Fettsäureestern aus Fett und/oder Öl biologischen Ursprungs durch Umesterung.

Umesterungsreaktionen an sich sind bekannt, sie stellen eine kommerziell bedeutsame Klasse industrieller organischer Reaktionen dar. Bei einer Umesterungsreaktion wird ein Ester durch Austausch der Säuregruppen oder durch Austausch der alkoholischen Gruppen in einen anderen Ester überführt. Wird die Umesterung durch Austausch der alkoholischen Gruppen vorgenommen, spricht man von der sogenannten Alkoholyse (auch Alkanolyse). Bei der Alkoholyse wird der Alkohol im Überschuß zugesetzt, um eine hohe Ausbeute am gewünschten Ester zu erhalten. In neuerer Zeit hat im Zusammenhang mit der Erzeugung von Dieselkraftstoff aus nachwachsenden Rohstoffen die Herstellung von Alkylestern, insbesondere von Methylestern, durch Alkoholyse vegetabilischer Öle (z.B. Rapsöl), erheblich an Aktualität gewonnen.

Die Umesterung ist eine Gleichgewichtsreaktion, die in der Regel bereits durch Mischen der Reaktanden ausgelöst wird. Die Reaktion verläuft jedoch so langsam, daß für die kommerzielle Durchführung der Reaktion ein Katalysator erforderlich ist. Als Katalysatoren dienen üblicherweise starke Säuren oder starke Basen.

Fette und Öle biologischen Ursprungs bestehen überwiegend aus Glyceriden (Mono-, Di- und Triglyceride). Bei der Umesterung solcher Fette und Öle kann die Komponente Glycerin durch niedermolekulare einwertige Alkohole substituiert werden. In der Praxis wird hierzu häufig die Methode nach Bradshaw (beschrieben in den US-Patenten 2,271,619 und 2,360,844) angewandt..Die Reaktion wird in einem offenen Behälter, der aus gewöhnlichem Kohlenstoffstahl bestehen kann, durchgeführt. Das Fett oder Öl muß trocken (wasserfrei), sauber und vor allem neutral sein, d.h. der Gehalt an freien Fettsäuren muß vemachlässigbar gering sein (Säurezahl nicht höher als 1,5). Das Ausgangsprodukt wird auf etwa 80 °C erwärmt, sodann wird handelsübliches, wasserfreies Methanol (99,7 Gew.%), das 0,1 bis 0,5 Gew.% Natriumhydroxid oder Kaliumhydroxid gelöst enthält, im Überschuss zugegeben (etwa das 1,2 bis 1,6-fache der stöchiometrischen Menge). Nach Zugabe des Alkohols wird das Gemisch einige Minuten gerührt und dann in Ruhe stehen gelassen. Das Glycerin beginnt unmittelbar sich abzusetzen. Da es praktisch frei von Wasser und viel schwerer als die anderen Flüssigkeiten ist, setzt es sich leicht ab und bildet eine Schicht auf dem Behälterboden. Die Reaktion eines Öles mit Methanol zu Methylester ist gewöhnlich nach einer Stunde zu 98 % vollständig. Die Bodenschicht (untere Schicht) enthält nicht weniger als 90 % des ursprünglich im Fett vorhandenen Glycerins. Die obere Schicht ist aus Methylestern, nicht umgesetztem Alkohol und Alkali, dem restlichen Glycerin, und einer sehr geringen Menge an Seife zusammengesetzt. Diese verschiedenen Verunreinigungen werden aus den Estern durch wiederholtes Waschen mit kleinen Mengen warmen Wassers herausgewaschen. Die Methode ist vorteilhaft, weil Methyl- oder Ethylester ohne Zwischenschritt unmittelbar aus dem Fett gewonnen werden können, die Reaktionstemperatur niedrig ist, und keine Apparaturen aus speziellem korrosionsbeständigem Material erforderlich sind.

Bei der Methode nach Bradshaw werden anschließend die erhaltenen Methylester in einem kontinuierlichen Prozess zur Herstellung wasserfreier Seife verwandt. Die Ester werden hierzu bei niedriger Temperatur durch Natriumhydroxid und Kaliumhydroxid verseift und das dabei freigesetzte, leicht flüchtige Methanol wird wiedergewonnen.

Feuge und Gros studierten die Umesterung von Erdnußöl mit Ethanol (J.Am. Chem. Soc. 26 [1949] 97 - 102). Sie fanden, daß die optimale Temperatur für die Reaktion in der Nähe von 50 °C liegt. Bei dieser Temperatur wurde eine höhere Glycerinausbeute als bei 30 °C oder 70 °C erhalten.

Toyama et. al. (Y.Toyama, T.Tsuchiya and T.Ishikava, J. Soc. Chem. Ind. Japan, 36 [1933] 230 - 232 B) zeigten, daß das Gleichgewicht zwischen Methanol oder Ethanol und Fetten in Gegenwart von Natriumhydroxid bei Raumtemperatur innerhalb von zwei Stunden erreicht wird. Um die Reaktion bis zum vollständigen Umsatz des Fettes zu Monoester zu bringen, muß das freigesetzte Glycerin entfernt werden.

In einer Arbeit von Wright et. al. (H.J. Wright, J.B. Segur, H.V. Clark, S.K. Coburn, E.E. Langdon and R.N. DuPuis, Oil & Soap, 21 [1944] 145 - 148) wurden die genauen Bedingungen für die Alkoholyse von Fetten mit Methanol und Ethanol im Detail untersucht. Weiterhin wird von den Autoren über Experimente über die Alkoholyse mit anderen einwertigen Alkoholen berichtet. Es wird dargelegt, daß die oben beschriebene, mit Alkali katalysierte Alkoholyse nur dann völlig erfolgreich ist, wenn das Fett nahezu frei von freien Fettsäuren und das Reaktionsgemisch frei von Wasser ist. Ist eine dieser Bedingungen nicht erfüllt, kommt es zur Verseifung, die einen Verlust an Alkalinität und die Bildung einer Gelstruktur zur Folge hat, die die Abtrennung und das Absetzen des Glycerins verhindert oder verlangsamt.

Schwierigkeiten entstehen bei der Ethanolyse, wenn der Gehalt an freien Fettsäuren im Fett mehr als etwa 0,5 Gew.% beträgt. Wenn 30 Teile Ethanol, 100 Teile Baumwollsaatöl und 0,5 Gew.% Natriumhydroxid zur Reaktion gebracht werden, wird die Glycerinausbeute erheblich durch 0,3 Gew.% Wasser im Reaktionsgemisch vermindert. Die Wirkung der Feuchtigkeit kann jedoch teilweise durch Hinzufügen von weiterem Alkali und/oder Alkohol kompensiert werden. Wird der Katalysatorgehalt verdoppelt oder die Alkoholmenge auf 40 Teile erhöht, kann der Wassergehalt im Reaktionsgemisch bis zu 0,6 Gew.% betragen.

Ebenso wird von Wright et al. gezeigt, daß die Geschwindigkeit der Gesamtreaktion grundsätzlich durch die Zeit begrenzt wird, die das Glycerin zur Abtrennung durch die Schwerkraft benötigt. Eine kontinuierliche Abtrennung durch Zentrifugieren bei 65 °C mit einer Verweilzeit von etwa 5 Minuten ergab ein ziemlich gutes Resultat von ungefähr 85 % des theoretischen Wertes. Bradshaw's und Meuly's Aussage, daß bei schrittweiser Zugabe des Alkohols und Entfernung des entstehenden Glycerins weniger Alkohol benötigt wird, wurde für die Methanolyse bestätigt, nicht jedoch für die Ethanolyse, bei der dieses Vorgehen zu Vergelung führt.

Insbesondere dann, wenn bei der Umesterung von Triglyceriden mit Methanol und Ethanol Natrium- und Kaliumverbindungen als Katalysatoren verwendet werden, treten verschiedene Probleme auf. So trennen sich die beiden Phasen nach der erfolgten Umesterungsreaktion aufgrund der in der Reaktion gebildeten Emulsion mit so geringer Geschwindigkeit, daß die Trennung sehr langwierig ist und große Reaktionsvolumina notwendig werden. Zudem bleiben in der Monoesterphase auch nach der Phasentrennung noch sehr feine Glycerintröpfchen suspendiert, die mit Wasser ausgewaschen werden müssen. Des weiteren muß der Katalysator, der in beiden Phasen verteilt ist, nach Abschluß der Reaktion zumindest aus der Monoesterphase entfernt werden. Abhängig von der weiteren Verwendung des Glycerins ist es darüber hinaus notwendig, den gelösten Katalysator auch aus der Glycerinphase zu entfernen. Als zusätzliches Problem wird angesehen, daß die Reaktion zuweilen nicht unmittelbar nach Herstellen des Gemisches einsetzt.

Zur Lösung der genannten Probleme sind eine Reihe von Verfahrensvorschlägen gemacht worden. So wird in dem US-Patent 2 383 614 ein Verfahren zu kontinuierlichen Alkoholyse von Fett beschrieben, bei dem eine Teilveresterung des Fettes oder Öles, gegebenenfalls in mehreren Schritten, vorgenommen wird und auch die Abscheidung des Glycerins in mehreren Stufen erfolgt. Gemäß dem US Patent 2 383 580 wird nach Beendigung der Reaktion zunächst der verwendete Katalysator durch Neutralisierung der Reaktionsmischung inhibiert, danach wird der überschüssige Alkohol durch Destillation entfernt. Das verbleibende Reaktionsgemisch wird im Vakuum destilliert. Dabei trennt sich das Kondensat in eine Glycerin- und eine Fettsäurealkylester-Schicht.

Nach dem im US Patent 4 164 506 vorgeschlagenen Verfahren werden in einem Zweistufenprozess zunächst die freien Fettsäuren mit kurzkettigen Alkoholen in Gegenwart saurer Katalysatoren zu den entsprechenden Estern umgesetzt. Danach erfolgt die Umesterung der Glyceride in Gegenwart von Alkali unter Abscheidung von Glycerin.

In der deutschen Offenlegungsschrift DE 34 21 217 A1 wird ein Verfahren zu Herstellung von Fettsäureestern kurzkettiger primärer und sekundärer Alkohole mit 1 bis 5 Kohlenstoff-Atomen durch Umesterung von Glyceriden beschrieben. Dabei wird durch die flüssigen Glyceride bei Temperaturen zwischen 230 und 270°C ein Strom des gasförmigen Alkohols hindurchgeleitet. Mit diesem Strom wird das Produktgemisch aus Glycerin und Fettsäurealkylester aus der Reaktionszone ausgetragen, das anschließend getrennt wird. Als Katalysator ist Alkali in den flüssigen Glyceriden des Reaktionsgefäßes gelöst.

Nach dem in der deutschen Patentschrift DE 198 03 053 C1 beschriebenen Verfahren werden Triglyceride in Gegenwart von geeigneten Katalysatoren, wie z. B. Zinkseifen, vorzugsweise in Gleichstromkolonnen bei Temperaturen von 200 bis 240°C und bei Drücken bis zu 90 bar mit Alkohol im mehrfach molaren Überschuß umgesetzt. Nach der Abtrennung des überschüssigen Alkohols werden Alkylester/Glycerin-Gemische erhalten, die in einem Separator in die leichtere organische Phase und in die Glycerinphase getrennt werden. An diese Phasentrennung schließt sich eine weitere Aufarbeitung und Reinigung der Produkte an. Die Esterphase wird mit Wasser gewaschen, um die im Produkt gelösten Glycerinreste zu entfernen. Dabei werden auch etwa 40 % der im Ester als Katalysator gelösten Zinkseifen in Form von Zinkhydroxid ausgewaschen.

Ferner wurden Untersuchungen mit dem Ziel angestellt, die Natrium- und Kaliumverbindungen durch basische Ammoniumverbindungen als Katalysator oder Reaktant zu ersetzen. Schuchardt et. al. (J. Braz. Chem. Soc. 9 [1998] 199-210) untersuchten im Hinblick auf ihre Eignung als Katalysator für die Alkoholyse von Fetten und Ölen die Aktivität zahlreicher nichtionischer Basen, z.B. Amine wie Triethylamin, Piperidin, 1,2,2,6,6,-Pentamethylpyridin, Pyridin, 2,6-Di-tert.-Butylpyridin, 4-Dimethyl-aminopyridin (DAMP), Guanidine wie 1,5,7-Triazabicyclo[4.4.0]dec-5-en (TBD), 1,1,3,3-Tetramethylguanidin (TMG), 1,1,2,3,3,-Pentabutylguanidin (PBG), 1,3-Diphenylguanidin, 1,2,3-Triphenylguanidin und weitere Amino- und Nitroguanidine, Triamino(imino)phosphorane wie tert.-Butylimino-2-diethylamino-1,3-perhydro-1,2,3-diazaphosphoran (BEMP), Tris(dimethylamino)-methylimino-phosphoran (Me₇P). Letztere werden häufig in in der organischen Synthese verwendet. In einer Serie wurde die katalytische Aktivität einiger Guanidine, z.B. der Amidine DBU und DBN, und der Phosphorane BEMP und Me₇P mit anderen Basen verglichen. Die Guanidine sind die aktiveren Katalysatoren. Die Aktivität folgt ihrer relativen Basizität. Die Aktivität von TBD bei einer Konzentration von 3 mol% war ähnlich wie die von 3 mol% Kaliumcarbonat.

Der Vorteil, den Guanidine bei der Umesterung von Fetten und Ölen biologischen Ursprungs bieten, besteht in der Möglichkeit, sie auf organischen Polymeren zu heterogenisieren und damit zu einer heterogenen Katalyse zu gelangen. Schuchardt et. al. untersuchten Cellulose, Polystyrol/Divinylbenzol, und Polyurethane bezüglich ihrer Tauglichkeit als Trägermaterial für Guanidine. Die Heterogenisierung von Guanidinen auf organischen Polymeren und ihr Gebrauch bei der Umesterung von vegetabilischen Ölen sind in dem Brasilianischen Patent 8202429 (1984, Erfinder U. Schuchardt und O.C. Lopes) beschrieben. Die Guanidine, die an gelartige Poly(styrol/divinylbenzol) bzw. Cellulose gebunden waren, zeigten gegenüber der katalytischen Reaktion in homogener Phase eine leicht verminderte Aktivität. Sie erlauben aber die gleich hohen Umsätze nach verlängerten Reaktionszeiten. Obwohl weniger aktiv als ihre homogenen Analogen, konnten alle Polymer enthaltenden Guanidine in einigen aufeinander folgenden Reaktionszyklen wieder verwendet werden. Jedoch wurde ein Verlust an Aktivität beobachtet, schon nach etwa 9 Reaktionszyklen war ein Nachlassen der Aktivität festzustellen. Dieser Aktivitätsrückgang bei wiederholtem Einsatz wurde hauptsächlich durch das langsame Auslaugen der verankerten Base aus den Polymeren verursacht.

Stand der Technik ist des weiteren die katalytische Beschleunigung der Umesterung von Phtalsäuremethylestern mit Glykolen durch Zinkacetat und anderen saure Katalysatoren. Die Alkoholyse von Fetten und Ölen mit Hilfe von Zinkseifen als Katalysatoren bei hohen Temperaturen (oberhalb 210°C) ist in der bereits erwähnten DE 198 03 053 C1 beschrieben. Da Schwermetallseifen, wie z. B. Zinkacetat, im Reaktionsgemisch aus Alkanol, Öl, Fettsäure, Alkanolester und Glycerin löslich sind, ist eine heterogene Katalyse nicht möglich. Zudem wurden bei niedrigeren Temperaturen, z. B. bei 85°C, keine merklichen Umsetzungen mit Zinkseifen als Katalysator gefunden.

Aus dem Vorstehenden ergibt sich, daß die Herstellung einfacher Fettsäureester aus Fett und/oder Öl biologischen Ursprungs bisher nicht zufriedenstellend gelöst ist. Fette und Öle biologischen Ursprungs enthalten neben Glyceriden immer auch freie Fettsäuren, mit denen sich die herkömmlich verwendeten Katalysatoren (insbesondere Alkalioxide oder Alkalialkoholate) nicht oder nur schlecht vertragen. Freie Fettsäuren, die im Ausgangsprodukt vorhanden sind, müssen deshalb vor der Umesterung, insbesondere wenn alkalische Katalysatoren verwendet werden sollen, bis auf Restkonzentrationen von 0,1 Gew.% und weniger entfernt werden. Enthält das Ausgangsprodukt viel freie Fettsäuren, ist eine chemische Entsäuerung zu aufwendig und es wird dann üblicherweise durch das sogenannte Dampfstrippen bei 240 °C bis 260 °C entsäuert. Die hohe Temperatur erfordert einen entsprechenden Energieaufwand.

Der Erfindung liegt daher die Aufgabe zugrunde, ein heterogen katalysiertes Verfahren zur Umesterung von Fett und/oder Öl biologischen Ursprungs bereitzustellen, bei dem der verwendete Katalysator stabil ist und die entstehenden Produkte nicht durch Katalysatormaterial verunreinigt sind. Insbesondere sollen mit dem neuen Verfahren auch die im Ausgangsmaterial vorhandenen freien Fettsäuren in Ester umgewandelt werden, um auf diese Weise die bisher erforderliche Entsäuerung einzusparen. Das neue Verfahren soll einfach auszuführen sein und gute Ausbeuten ergeben.

Diese Aufgabe ist erfindungsgemäß mit einem Verfahren gelöst, das die im Patentanspruch 1 genannten Schritte aufweist. Als Alkohol wird vorzugsweise ein einwertiger Alkohol verwendet.

Überraschenderweise wurde demnach gefunden, daß z. B. das Zinksalz des Arginins in Methanol und darüberhinaus in Gemischen aus Glyceriden, Glycerin, Methylestern und Methanol, wie sie bei der Methanolyse vorkommen, unlöslich ist. Nach 4-stündigem Extrahieren mit Methanol in einem Soxhlet-Apparat konnte kein Gewichtsverlust festgestellt werden. Somit ist diese Verbindung als Katalysator für eine heterogen katalysierte Umesterung gut geeignet. Bei der Methanolyse mit Zinkarginat als Katalysator wurde bei 85°C und einem Zusatz von 6 Moläquivalent Methanol zu entsäuertem Palmöl im Verlauf von 180 Minuten eine Ausbeute von 45 % an Methylestern erhalten. Bei gleichen Bedingungen wurden mit Zinkglycinat als Katalysator nur eine Ausbeute von 0,5 % an Methylestern bei 180 Minuten Kontaktzeit erhalten. Die höhere Aktivität des Zinkarginats bei tiefen Temperaturen dürfte auf die höhere Basizität des Arginins im Vergleich zum Glycin zurückzuführen sein. Bei 135°C ist der Unterschied in der katalytischen Aktivität zwischen Zinkarginat und Zinkglycinat geringer als bei 70°C. Das Zinkarginat zeichnet sich dadurch aus, daß es weder im Methanol noch in den Fetten und Ölen löslich ist. Es kann somit als Basis für eine heterogen katalysierte Alkoholyse dienen. Analoges Verhalten zeigt das Arginat des Cadmiums.

Zinkarginat kann zu relativ stabilen Pillen gepreßt und in dieser Form als Packung in einen Rohrreaktor installiert werden. Eine weitere Verfahrensweise besteht darin, daß das pulverförmige, feinkristalline Metallarginat im Gemisch aus Öl und Alkanol suspendiert wird. Nach Durchlaufen einer Rührkesselkaskade wird der Katalysator abfiltriert oder mit einer Zentrifuge abgetrennt und rezirkuliert. Anschließend wird das bei der Reaktion entstandene Gemisch aus überschüssigem Methanol, Glycerin, und gegebenenfalls Wasser (bei größeren Konzentrationen an freien Fettsäuren im Feed) von der Methylesterphase dekantiert. Die entstandenen Ester werden durch Destillation von unverseifbarem und nicht umgesetzten Resten befreit und gereinigt.

Weiterhin ergab sich, daß Schwermetallsalze von Aminosäuren, die unlöslich in den Reaktionsgemischen aus Glyceriden, Alkoholen, Fettsäurealkylestern, und Glycerin sind, die Alkoholyse von Glyceriden auch in Gegenwart von freien Fettsäuren katalysieren. Bevorzugte Metalle sind: Zink, Lanthan, Cadmium, Eisen, etc. Dabei können die zur Umesterung entstehenden Fette und Öle größere Mengen an freien Fettsäuren enthalten. Selbst bei Konzentrationen an freien Fettsäuren von rund 10 Gew.% ist die Geschwindigkeit der Umesterungsreaktion mit den Katalysatoren nach dieser Erfindung bei Temperaturen über 100°C für eine kommerzielle Anwendung ausreichend. Bevorzugte Alkanole für das Verfahren nach dieser Erfindung sind primäre und sekundäre Alkanole mit 1 bis 6 C-Atomen.

In Gegenwart von größeren Konzentrationen an freien Fettsäuren wird die Reaktionsgeschwindigkeit gegenüber der Reaktion mit fettfreien Neutralölen etwas vermindert. Durch Erhöhung der Alkanolkonzentration und/oder der Temperatur und/oder der Katalysatorkonzentration kann der Abfall der Aktivität des Katalysators ausgeglichen und eine für praktische Zwecke ausreichende Reaktionsgeschwindigkeit erhalten werden.

Weitere Untersuchungen zeigten, daß auch die Schwermetallsalze von Betain, Carnitin, und Taurin, welche quaternären Stickstoff enthalten, als Katalysatoren für die Umesterung von Glyceriden mit Alkanolen geeignet sind. Sie zeigen bei Temperaturen oberhalb 100°C eine gute katalytische Aktivität. Das Lanthansalz des Taurins ist wegen seiner Stabilität gegen Temperaturbelastung und seiner Unlöslichkeit in den in Frage stehenden Reaktionsmedien attraktiv.

Die Katalysatoren nach dieser Erfindung bilden mit den freien Fettsäuren keine Seifen, die die Abtrennung des Glycerins durch eine Emulgator-Wirkung erschweren. Nach einer 93-stündigen Kontaktzeit konnte bei 135°C kein Nachlassen der katalytischen Aktivität des Zinkarginates beobachtet werden. Eine Verminderung der Konzentration von Nebenprodukten, wie Tocopherolen, Tocotrienolen und Carotinen wurde bei der relativ hohen Temperatur von 135°C selbst bei Reaktionszeiten von mehr als 4 Stunden nicht beobachtet.

Gelegentlich ist es bei der Veresterung von Triglyceriden im Batchprozess bei einem höheren Gehalt an freien Fettsäuren vorteilhaft, das Alkanol schrittweise zuzugeben. Im ersten Schritt wird etwa 1/3 der insgesamt vorgesehenen Alkanolmenge zugegeben und abgewartet, bis das Alkanol umgesetzt ist. Danach wird die nächste Portion zugegeben und wieder eine kurze Zeit abgewartet. So wird fortgefahren, bis das gesamt Alkanol zur Reaktion gebracht ist.

Bei der erfindungsgemäßen Umesterung von Triglyceriden, die größere Mengen an freien Fettsäuren enthalten, fällt das neben Glycerin entstehende Wasser im Gemisch mit Glycerin als separate, schwere Phase aus. Das Gemisch aus Glycerin und Wasser wird dekantiert. Da bei Verwendung eines festen Katalysators die Bildung von Seifen ausgeschlossen ist, verursacht die gemeinsame Bildung von Glycerin und Wasser keine Erhöhung der Tendenz zur Emulsionsbildung. Die Separation des Reaktionsgemisches in zwei flüssige Phasen erfolgt bei Temperaturen über 100°C schnell und vollständig. Es entstehen zwei koexistierende klare flüssige Phasen. Bei tieferen Temperaturen empfiehlt sich die Anwendung einer Zentrifuge.

Die konventionelle Alkanolyse, die mit basischen Katalysatoren, wie Natriummethylat, Natriumhydroxid, Kaliummethylat, Kaliumhydroxid usw. beschleunigt wird, erfordert eine möglichst weitgehende Entfernung der freien Fettsäuren aus dem Ausgangsmaterial. Da die Fette und Öle aus Ölsaaten nur in seltenen Fällen freie Fettsäuren in einer Konzentration von mehr als 20 Gew.% enthalten, ist im allgemeinen bei der Alkanolyse nach dem Verfahren dieser Erfindung eine Entsäuerung des Ausgangsproduktes überflüssig. Der Fortfall dieses Zwischenschrittes bedeutet eine wesentlich Einsparung von Kosten für Betriebsmittel, Investitionen und Arbeitsaufwand.

Werden - wie erfindungsgemäß vorgeschlagen - Salze verwendet, die im Reaktionsgemisch unlöslich sind, so können die Vorteile einer heterogenen Verfahrensweise genutzt werden. In diesem Fall enthalten die bei der Alkoholyse entstehenden beiden flüssigen Phasen keinen Katalysator, was ihre Aufarbeitung merklich vereinfacht. Da die Katalysatoren nach dieser Erfindung temperaturbeständig bis zu etwa 200°C sind, ist es möglich, die Alkoholyse im Temperaturbereich bis zu 180°C ohne auftretende Nebenreaktion durchzuführen. Schließlich ist die Reaktionsgeschwindigkeit bei Temperaturen oberhalb 120°C so groß, daß eine kontinuierliche Prozessführung möglich ist.

Nachstehend sind beispielhaft einige Aminosäuren aufgeführt, die sich für das Verfahren nach dieser Erfindung eignen: Arginin, Asparagin, Carnitin, Creatin, Betain, Dimethylglycin, Glycin, Lysin, Ornithin, Taurin etc. Die in den Alkanolen unlöslichen Schwermetallsalze dieser Aminosäuren sind als Katalysatoren für die heterogene Umesterung von Fetten und Ölen mit Alkanolen geeignet.

Das Verfahren soll nachfolgend an verschiedenen Beispielen näher erläutert werden, ohne dadurch den beanspruchten Schutz einzuschränken.

### Beispiel 1

100 g Palmöl, das 2,0 Gew.% freie Palmitinsäure, 0,7 Gew.% freie Ölsäure, 1,5 Gew.% freie Linol- und Linolensäure, und 0,2 Gew.% Stearinsäure enthielt, wurden mit 30 ml Methanol vermischt, in welchem 0,8 g eines feinen Pulvers von Zinkarginat suspendiert waren. Die Mischung wurde in ein geschlossenes Metallgefäß gegeben und auf 135 °C erwärmt. Dabei stellte sich ein Druck von ca. 5 bar ein, der durch das vorhandene Methanol verursacht war. Nach 70 Minuten wurde die Mischung abgekühlt und die Ölphase auf ihren Gehalt an Methylestern analysiert. 70 Gew.% der Triglyceride des Palmöls waren zu Methylestern umgesetzt worden. Das Zinkarginat blieb dabei unverändert. Es lag somit eine heterogene Katalyse vor.

### Beispiel 2

100 g Palmöl mit einem dem Beispiel 1 entsprechenden Gehalt an freien Fettsäuren wurden mit 35 ml Methanol vermischt, anschließend wurden 6 g des pulverförmigen Calziumsalzes der 2-Amino-5-guanidinovaleriansäure in der Mischung suspendiert. Die Mischung wurde in einem Autoklaven auf 80 °C bei Umgebungsdruck erwärmt. Nach 250 Minuten wurde aus der Ölphase eine Probe entnommen und analysiert. 57 Gew.% der eingesetzten Triglyceride waren zu Methylestern umgesetzt worden. Die Ausbeute an Glycerin betrug 90 Gew.%. Das Calziumarginat blieb im Laufe der Reaktion im wesentlichen unverändert als feste Substanz erhalten, nur ein geringfügiger Anteil ging in Lösung.

### Beispiel 3

100 g entsäuertes Sonnenblumenöl wurden mit 30 ml Methanol vermischt, woraufhin in der Mischung 8 g pulverförmiges Zinksalz der 2-Amino-5-guanidinovaleriansäure (Zinkarginat) suspendiert wurde. Bei 80 °C und Umgebungsdruck wurde das Gemisch zur Reaktion gebracht. Nach 200 Minuten waren 30 Gew.% der Öls zu Methylestern umgesetzt worden. Das Zinkarginat blieb dabei unverändert in festem Zustand erhalten.

### Beispiel 4

100 g Palmöl mit einem Gehalt an freien Fettsäuren von 4,4 Gew.% wurden mit 30 ml Methanol und 6 g eines pulverförmigen Zinksalzes der Aminoessigsäure (Glycin) vermischt. Das Gemisch wurde auf 85 °C erwärmt. Nach 120 Minuten waren 0,1 Gew.% Methylester entstanden. Danach wurde die Reaktionsmischung in ein geschlossenes Gefäß gegeben und auf 135 °C erhitzt. Über der Reaktionsmischung entstand, dem Dampfdruck des Methanol entsprechend, ein Druck von 6 bar. Nach einer Zeitdauer von 70 Minuten waren bereits 65 Gew.% des eingesetzten Palmöls zu Methylestern umgesetzt worden. Unter Reaktionsbedingungen waren etwa 50 % des Zink-Glycinates in Lösung gegangen, die nach Abkühlung des Reaktionsgemisches größtenteils wieder ausfielen. Infolgedessen ist in Anbetracht der genannten Reaktionsbedingungen davon auszugehen, daß eine homogene und eine heterogene Katalyse parallel nebeneinander verliefen. Das entstandene Glycerin fiel mit dem gelösten Reaktionswasser als schwere Phase aus.

### Beispiel 5

60g entsäuertes Sonnenblumenöl wurden mit 20 ml Methanol und 3 g pulverförmigem Zinkarginat vermischt und in einem Autoklaven bei 135 °C zur Reaktion gebracht. Es stellte sich ein Druck von 6 bar ein. Nach 180 Minuten waren 73 Gew.% des Sonnenblumenöls zu Methylestern umgesetzt worden. Das Zinkarginat lag während und nach der Reaktion unverändert in festem Zustand vor.

### Beispiel 6

100 g Palmöl mit einem Gehalt von 4,4 Gew.% an freien Fettsäuren wurden mit 30 ml Methanol und 4 g pulverförmigem Lanthanarginat vermischt und anschließend auf 135 °C erwärmt. Nach 120 Minuten waren 73 Gew.% des Palmöls zu Methylestern umgesetzt worden. Im Verlaufe der Reaktion ging eine geringe Menge Lanthanarginat in Lösung.

### Beispiel 7

100 g Dämpferkondensat mit einem Gehalt an freien Fettsäuren von 90 Gew.% wurden mit 30 ml Methanol und 6 g pulverförmigem Zinkarginat vermischt und auf 80 °C erwärmt. Nach 120 Minuten waren 4 Gew.% des Dämpferkondensates zu Methylestern umgesetzt. Das Zinkarginat blieb dabei unverändert.

### Beispiel 8

60 g Palmöl mit 4,4 Gew.% freien Fettsäuren wurden mit 30 ml Methanol und 0,8 g pulverförmigem Zinkarginat vermischt und auf 135 °C erwärmt. Das Zinkarginat war zuvor 18 Stunden lang im Einsatz gewesen. Nach 120 Minuten Reaktionszeit hatten 67 Gew.% des Öles zu Methylestern reagiert. Bei Zusatz von frischem Zinkarginat waren bei gleichen Bedingungen nach 120 Minuten 64 Gew.% Palmöl zu Methylestern umgesetzt worden.

### Beispiel 9

60 g Palmöl mit einem Gehalt an freien Fettsäuren von 4,4 Gew.% wurden mit 20 g Methanol und 4 g Zinkglycin vermischt und auf 80 °C erwärmt. Nach 120 Minuten waren 0,1 Gew.% Methylester entstanden.

### Beispiel 10

100 g eines Dämpferkondensates aus 81,5 Gew.% freien Fettsäuren und 18,5 Gew.% Triglyceriden wurden mit 25 g Zinkarginat und 17 ml Methanol vermischt. Die Suspension wurde auf 135 °C erwärmt; dabei entstand im Reaktionsgefäß ein Druck von 5 bar. Nach 120 Minuten enthielt die Ölphase 55 Gew.% Methylester. Das Zinkarginat blieb während der Reaktion unverändert.

### Beispiel 11

100 g eines Palmöls, das 4,4 Gew.% freie Fettsäuren enthielt, wurden mit 25 g Zinkarginatpulver und 20 ml Ethanol vermischt und die entstandene Suspension auf 135 °C erwärmt. Im Reaktionsgefäß entstand ein Druck von etwa 5 bar. Nach 120 Minuten waren in der Ölphase 36 Gew.% Ethylester vorhanden. Das Zinkarginat blieb dabei unverändert.

### Beispiel 12

100 g Palmöl mit einem Gehalt von 4,4 Gew.% freien Fettsäuren wurden mit 97 g pulverförmigem Zinkarginat und 32 ml Methanol vermischt. Die Suspension wurde auf 80 °C erwärmt. Nach 120 Minuten enthielt die Ölphase 20 Gew.% Methylester.

### Beispiel 13

100 g Palmöl mit 4,4 Gew.% freien Fettsäuren wurden mit 12 g pulverförmigem Zinkcreatinat und 18 ml Methanol vermischt. Die Suspension wurde auf 80 °C erwärmt. Nach 120 Minuten waren 13 Gew.% des Öles zu Methylestern umgesetzt worden. Die Löslichkeit des Zinkcreatinates in Methanol ist zwar kleiner als 0,1 %, sie dürfte jedoch für einen kontinuierlichen heterogenen Prozess noch zu hoch sein.

### Beispiel 14

100 g eines Produktes, das bei der chemischen Entsäuerung von Sonnenblumenöl angefallen war und zu 80,5 Gew.% aus freien Fettsäuren bestand, wurden mit 25 ml Methanol und 17 g pulverförmigem Zinkarginat versetzt. Die Suspension wurde in einem Autoklaven auf 145 °C erwärmt, wobei sich ein Druck von 8,5 bar einstellte. Nach 30 Minuten Reaktionszeit enthielt das Reaktionsgemisch 43 Gew.% Methylester.

### Beispiel 15

100 g Palmöl mit einem Gehalt an freien Fettsäuren von 4,4 Gew.% wurden mit 14 g pulverförmigem Zinkasparagat und 20 ml Methanol vermischt. Die Suspension wurde in einem Autoklaven auf 135 °C erwärmt. Nach 90 Minuten enthielt das Reaktionsgemisch 13 Gew.% Methylester.

### Beispiel 16

150 g entsäuertes Palmöl wurden mit 20 g pulverförmigem Nickelarginat und 100 ml Methanol vermischt. Die Suspension wurde bei Umgebungsdruck auf 80 °C erwärmt. Nach einer Reaktionszeit von 30 Minuten war das Öl vollständig (99,8 Gew.%) zu Methylestern umgesetzt worden. Ein großer Teil des Nickelarginates ging durch Reaktion mit dem entstehenden Glycerin verloren.

### Beispiel 17

100 g Sonnenblumenöl mit einem Gehalt von 0,8 Gew.% an freien Fettsäuren wurden mit 6 Äquivalenten Methanol vermischt und das Gemisch bei 125°C über eine Packung von feinkörnigem Zinkarginat gepumpt. Im Autoklaven herrschte dabei ein Druck von ca. 5 bar. Nach einer Kontaktzeit von 21 Minuten enthielt die Reaktionsmischung 80 % Methylester. Der Gehalt an freien Fettsäuren hatte sich dabei auf 0,7 % geringfügig vermindert.

### Beispiel 18

100 g entsäuertes Sonnenblumenöl wurden mit 6 Äquivalenten Methanol vermischt und das Gemisch bei 125°C über eine Packung von feinkörnigem Zinkarginat gepumpt. Im Autoklaven wurde ein Druck von ca. 5 bar gemessen. Nach einer Kontaktzeit von 20 Minuten enthielt die Reaktionsmischung 86 % Methylester.

### Beispiel 19

100 g entsäuertes Rapsöl wurde mit 6 Äquivalenten Methanol vermischt und das Gemisch bei 125°C durch eine Packung aus feinkörnigem Zinkarginat gepumpt. Im Autoklaven stellte sich ein Druck von ca. 5 bar ein. Nach einer Kontaktzeit von 20 Minuten enthielt die Reaktionsmischung 58 % Methylester.

### Beispiel 20

100 g Sonnenblumenöl wurden mit 6 Äquivalenten Methanol (83 ml) vermischt und das Gemisch durch eine Packung von grobkörnigem Katalysator bei 125°C gepumpt. Der Katalysator war durch Fällung eines Zinksalzes mit Carnitin (3-Hydroxy-4-trimethylammonio-butyrat)hergestellt worden. Im Autoklaven stellte sich ein Druck von ca. 4 bar ein. Nach einer Kontaktzeit von 17 Minuten enthielt die Ölphase abzüglich Methanol 55 % Methylester. Das Zinkcarnitinat blieb dabei unverändert.

### Beispiel 21

50 g entsäuertes Palmöl wurden mit 40 ml Methanol vermischt. In der Mischung wurden 3 g pulverförmiges Cadmiumarginat suspendiert. Die Suspension wurde am Rückflußkühler auf 85°C bei leichtem Sieden erhitzt. Nach 120 Minuten waren 19 % des Palmöls zu Methylestern umgesetzt. Das Cadmiumsalz des Arginins ist stabil und bleibt im Verlaufe der Reaktion unverändert.

### Beispiel 22

100 g entsäuertes Palmöl wurden mit 80 ml Methanol vermischt und das Gemisch bei 125°C durch ein Festbett von körnigem Zinksalz des Carnitins gepumpt. Nach einer Kontaktzeit von 30 Minuten enthielt das Reaktionsgemisch 40 % Methylester. Das Zinksalz des Carnitins zeigte keine Veränderung.

### Beispiel 23

100 g eines Gemisches aus 85 % Methylestern und 15 % Glyceriden wurden mit 46 ml 2-Propanol vermischt und das Gemisch bei 150°C durch eine Packung aus feinkörnigem Zinkarginat gepumpt. Nach einer Kontaktzeit von 15 Minuten enthielt das Reaktionsgemisch abzüglich Alkanole 5 % iso-Propylester.

### Beispiel 24

76 g entsäuertes Palmöl wurden mit 62 ml 2-Propanol gemischt. Die Mischung wurde bei 150°C durch eine Packung aus feinkörnigem Zinkarginat gepumpt. Nach einer Kontaktzeit von 20 Minuten enthielt das Reaktionsgemisch abzüglich Alkanol 15 % iso-Propylester.

### Beispiel 25

100 g entsäuertes Palmöl wurden mit 81 ml Methanol vermischt. Das Gemisch wurde bei 125°C durch eine Packung aus dem feinkörnigen Zinksalz des Taurins (2-Aminoethansulfonsäure) gepumpt. Nach einer Verweilzeit von 20 Minuten enthielt das Reaktionsgemisch abzüglich Methanol 25 % Methylester.

### Beispiel 26

74,5 g entsäuertes Palmöl wurden mit 64 ml Methanol (molares Verhältnis 1:6) vermischt. Das Gemisch wurde bei 125°C durch eine Packung aus der feinkörnigen Fällung von Zink durch Betain (Trimethylammonioacetat) gepumpt. Nach einer Verweilzeit von 18 Minuten waren 56 % des Palmöls zu Methylestern umgesetzt.

### Beispiel 27

97 g entsäuertes Palmöl wurden mit 20 ml Methanol (molares Verhältnis 1:1,5) vermischt. Das Gemisch wurde bei 85°C mit 4 g feinkörnigem Eisenarginat unter ständigem Rühren zur Reaktion gebracht. Nach 120 Minuten waren 17 % des Palmöls zu Methylestern umgesetzt worden. Am Katalysator wurde keine Veränderung beobachtet.

### Beispiel 28

98 g entsäuertes Palmöl wurden 75 ml Methanol (molares Verhältnis 1:5,6) vermischt. Das Gemisch wurde bei 125°C durch eine Packung aus feinkörnigem Lanthantaurid gepumpt. Nach einer Kontaktzeit von 120 Minuten waren 10 % des Palmöls zu Methylestern umgesetzt. Das Lanthantaurid blieb unverändert.

## Patentansprüche

1. Verfahren zur Umesterung von Fett und/oder Öl biologischen Ursprungs mittels Alkoholyse, mit den Schritten:
- Bereitstellen von umzuesterndem Fett und/oder Öl biologischen Ursprungs in einem Gefäß, und
- Durchführen der Alkoholyse durch Zugabe eines Alkanols, insbesondere eines einwertigen Alkanols, und eines Katalysators zu dem bereitgestellten Fett und/oder Öl, wobei der Katalysator ein in Alkanolen unlösliches Metallsalz einer Aminosäure oder eines Aminosäurederivates ist.

2. Verfahren nach Anspruch 1,
**dadurch gekennzeichnet, daß** die Metallkomponente des Katalysators Calcium, Strontium, Barium, ein anderes Erdalkalimetall, oder ein Schwermetall ist, insbesondere Silber, Kupfer, Zink, Mangan, Eisen, Nickel, Cobalt, Lanthan oder ein anderes Seltenerdmetall.

3. Verfahren nach Anspruch 1 oder 2,
**dadurch gekennzeichnet, daß** die Aminosäurekomponente des Katalysators quaternären Stickstoff oder eine Guanidingruppe enthält.

4. Verfahren nach einem der Ansprüche 1 bis 3,
**dadurch gekennzeichnet, daß** der Katalysator im Reaktionsgemisch bestehend aus Glyceriden, Alkoholen, Fettsäureestern und Glycerin unlöslich ist.

5. Verfahren nach einem der Ansprüche 1 bis 4,
**dadurch gekennzeichnet, daß** der Katalysator ein Schwermetallsalz des Arginins ist, insbesondere das Zinksalz oder das Cadmiumsalz des Arginins.

6. Verfahren nach einem der Ansprüche 1 bis 4,
**dadurch gekennzeichnet, daß** der Katalysator ein Salz des Lanthans mit einer Aminosäure ist, insbesondere das Lanthansalz des Taurins, der Dimethylamino-essigsäure oder der 2-Amino-5-guanidinovaleriansäure.

7. Verfahren nach einem der Ansprüche 1 bis 4,
**dadurch gekennzeichnet, daß** der Katalysator das Zinksalz des Carnitins ist.

8. Verfahren nach einem der Ansprüche 1 bis 4,
**dadurch gekennzeichnet, daß** der Katalysator das Calciumsalz der 2-Amino-5-guanidinovaleriansäure ist.

9. Verfahren nach einem der Ansprüche 1 bis 4,
**dadurch gekennzeichnet, daß** der Katalysator ein Salz des Glycins ist, insbesondere das Zinksalz des N,N-Dimethylglycins.

10. Verfahren nach einem der Ansprüche 1 bis 4,
**dadurch gekennzeichnet, daß** der Katalysator das Zinksalz des Creatins (N-Guanil-N-methylglycin) ist.

11. Verfahren nach einem der vorhergehenden Ansprüche,
**dadurch gekennzeichnet, daß** die Alkoholyse bei Temperaturen im Bereich von 60 °C bis 200 °C, vorzugsweise im Bereich von 80 °C bis 180 °C, insbesondere im Bereich von 120 °C bis 150 °C durchgeführt wird.

12. Verfahren nach einem der vorhergehenden Ansprüche,
**dadurch gekennzeichnet, daß** der Anteil freier Fettsäuren in dem bereitgestellten Fett und/oder Öl mehr als 0,2 Gew.%, insbesondere mehr als 1 Gew.% beträgt.

13. Verfahren nach einem der Ansprüche 1 bis 11,
**dadurch gekennzeichnet, daß** der Anteil freier Fettsäuren in dem bereitgestellten Fett und/oder Öl mehr als 4 Gew.% beträgt.

14. Verfahren nach einem der Ansprüche 1 bis 11,
**dadurch gekennzeichnet, daß** der Anteil freier Fettsäuren in dem bereitgestellten Fett und/oder Öl mehr als 10 Gew.% beträgt.

15. verfahren nach einem der Ansprüche 1 bis 11,
**dadurch gekennzeichnet, daß** der Anteil freier Fettsäuren in dem bereitgestellten Fett und/oder Öl mehr als 20 Gew.% beträgt.

16. Verfahren nach einem der Ansprüche 1 bis 11,
**dadurch gekennzeichnet, daß** der Anteil freier Fettsäuren in dem bereitgestellten Fett und/oder Öl mehr als 50 Gew.% beträgt.

17. Verfahren nach einem der Ansprüche 1 bis 11,
**dadurch gekennzeichnet, daß** der Anteil freier Fettsäuren in dem bereitgestellten Fett und/oder Öl mehr als 80 Gew.% beträgt.

18. Verfahren nach einem der Ansprüche 1 bis 11,
**dadurch gekennzeichnet, daß** der Anteil freier Fettsäuren in dem bereitgestellten Fett und/oder Öl 90 Gew.% beträgt.

## Claims

1. A process for the transesterification of fat and/or oil of biological origin by means of alcoholysis, comprising the steps:
- provision in a vessel of fat and/or oil of biological origin to be transesterified, and
- implementation of the alcoholysis by addition of an alkanol, in particular of a monohydric alkanol, and of a catalyst to the fat and/or oil that has been provided, the catalyst being a metal salt of an amino acid or of an amino-acid derivative insoluble in alkanols.

2. The process according to Claim 1,
**characterised in that** the metal component of the catalyst is calcium, strontium, barium, another alkaline-earth metal, or a heavy metal, in particular silver, copper, zinc, manganese, iron, nickel, cobalt, lanthanum or another rare-earth metal.

3. The process according to Claim 1 or 2,
**characterised in that** the amino-acid component of the catalyst contains quaternary nitrogen or a guanidine group.

4. The process according to one of Claims 1 to 3,
**characterised in that** the catalyst is insoluble in the reaction mixture consisting of glycerides, alcohols, fatty-acid esters and glycerine.

5. The process according to one of Claims 1 to 4,
**characterised in that** the catalyst is a heavy-metal salt of arginine, in particular the zinc salt or the cadmium salt of arginine.

6. The process according to one of Claims 1 to 4,
**characterised in that** the catalyst is a salt of lanthanum with an amino acid, in particular the lanthanum salt of taurine, of dimethylaminoacetic acid or of 2-amino-5-guanidinovaleric acid.

7. The process according to one of Claims 1 to 4,
**characterised in that** the catalyst is the zinc salt of carnitine.

8. The process according to one of Claims 1 to 4,
**characterised in that** the catalyst is the calcium salt of 2-amino-5-guanidinovaleric acid.

9. The process according to one of Claims 1 to 4,
**characterised in that** the catalyst is a salt of glycine, in particular the zinc salt of N,N-dimethylglycine.

10. The process according to one of Claims 1 to 4,
**characterised in that** the catalyst is the zinc salt of creatine (N-guanil-N-methylglycine).

11. The process according to one of the preceding claims,
**characterised in that** the alcoholysis is carried out at temperatures in the range from 60°C to 200°C, preferably in the range from 80°C to 180°C, in particular in the range from 120°C to 150°C.

12. The process according to one of the preceding claims,
**characterised in that** the proportion of free fatty acids in the fat and/or oil that has been provided amounts to more than 0.2 wt.%, in particular more than 1 wt.%.

13. The process according to one of Claims 1 to 11,
**characterised in that** the proportion of free fatty acids in the fat and/or oil that has been provided amounts to more than 4 wt.%.

14. The process according to one of Claims 1 to 11,
**characterised in that** the proportion of free fatty acids in the fat and/or oil that has been provided amounts to more than 10 wt.%.

15. The process according to one of Claims 1 to 11,
**characterised in that** the proportion of free fatty acids in the fat and/or oil that has been provided amounts to more than 20 wt.%.

16. The process according to one of Claims 1 to 11,
**characterised in that** the proportion of free fatty acids in the fat and/or oil that has been provided amounts to more than 50 wt.%.

17. The process according to one of Claims 1 to 11,
**characterised in that** the proportion of free fatty acids in the fat and/or oil that has been provided amounts to more than 80 wt.%.

18. The process according to one of Claims 1 to 11,
**characterised in that** the proportion of free fatty acids in the fat and/or oil that has been provided amounts to 90 wt.%.

## Revendications

1. Procédé de transestérification de corps gras et/ou d'huile d'origine biologique au moyen d'alcoolyse, avec les étapes consistant à :
- mettre à disposition un corps gras et/ou une huile d'origine biologique à transestérifier dans un récipient, et
- effectuer l'alcoolyse par addition d'un alcanol, en particulier d'un alcanol monofonctionnet, et d'un catalyseur au corps gras et/ou à l'huile à transestérifier, le catalyseur étant un sel métallique insoluble dans des alcanols d'un acide aminé ou d'un dérivé d'acide aminé.

2. Procédé selon la revendication 1, **caractérisé en ce que** le composant métallique du catalyseur est le calcium, le strontium, le baryum, un autre métal alcalino-terreux, ou un métal lourd, en particulier l'argent, le cuivre, le zinc, le manganèse, le fer, le nickel, le cobalt, le lanthane ou un autre métal de terres rares.

3. Procédé selon la revendication 1 ou 2, **caractérisé en ce que** le composant acide aminé du catalyseur contient de l'azote quaternaire ou un groupe guanidine.

4. Procédé selon l'une des revendications 1 à 3, **caractérisé en ce que** le catalyseur est insoluble dans le mélange réactionnel constitué de glycérides, d'alcools, d'esters d'acides gras et de glycérine.

5. Procédé selon l'une des revendications 1 à 4, **caractérisé en ce que** le catalyseur est un sel de métal lourd d'arginine, en particulier le sel de zinc ou le sel de calcium d'arginine.

6. Procédé selon l'une des revendications 1 à 4, **caractérisé en ce que** le catalyseur est un sel de lanthane avec un acide aminé, en particulier le sel de lanthane de taurine, de l'acide diméthylaminoacétique ou de l'acide 2-amino-5-guanidinovalérianique.

7. Procédé selon l'une des revendications 1 à 4, **caractérisé en ce que** le catalyseur est le sel de zinc de la carnitine.

8. Procédé selon l'une des revendications 1 à 4, **caractérisé en ce que** le catalyseur est le sel de calcium de l'acide 2-amino-5-granidinovalérianique.

9. Procédé selon l'une des revendications 1 à 4, **caractérisé en ce que** le catalyseur est un sel de glycine, en particulier le sel de zinc de la N,N-diméthylglycine.

10. Procédé selon l'une des revendications 1 à 4, **caractérisé en ce que** le catalyseur est le sel de zinc de la créatine (N-guanil-N-méthylglycine).

11. Procédé selon l'une des revendications précédentes, **caractérisé en ce qu'**on effectue l'alcoolyse à des températures dans la plage de 60°C à 200°C, de préférence dans la plage de 80°C à 180°C, en particulier dans la plage de 120°C à 150°C.

12. Procédé selon l'une des revendications précédentes, **caractérisé en ce que** la quantité d'acides gras libres dans le corps gras et/ou l'huile mis à disposition est supérieure à 0,2 % en poids, en particulier supérieure à 1 % en poids.

13. Procédé selon l'une des revendications 1 à 11, **caractérisé en ce que** la quantité d'acides gras libres dans le corps gras et/ou l'huile mis à disposition est supérieure à 4 % en poids.

14. Procédé selon l'une des revendications 1 à 11, **caractérisé en ce que** la quantité d'acides gras libres dans le corps gras et/ou l'huile mis à disposition est supérieure à 10 % en poids.

15. Procédé selon l'une des revendications 1 à 11, **caractérisé en ce que** la quantité d'acides gras libres dans le corps gras et/ou l'huile mis à disposition est supérieure à 20 % en poids.

16. Procédé selon l'une des revendications 1 à 11, **caractérisé en ce que** la quantité d'acides gras libres dans le corps gras et/ou l'huile mis à disposition est supérieure à 50 % en poids.

17. Procédé selon l'une des revendications 1 à 11, **caractérisé en ce que** la quantité d'acides gras libres dans le corps gras et/ou l'huile mis à disposition est supérieure à 80 % en poids.

18. Procédé selon l'une des revendications 1 à 11, **caractérisé en ce que** la quantité d'acides gras libres dans le corps gras et/ou l'huile mis à disposition est supérieure à 90 % en poids.
